# EUROPÄISCHE PATENTSCHRIFT

(11) **EP 1 688 213 B1**
(45) Veröffentlichungstag und Bekanntmachung des Hinweises auf die Patenterteilung: **10.10.2007**
(21) Anmeldenummer: 05111524.4
(22) Anmeldetag: 30.11.2005
(51) Int. Cl.: B23Q 1/54

(54) **Schwenkeinheit**
Rotating swivel unit
Unité articulée rotative

(30) Priorität: 02.02.2005 DE 102005005136
(43) Veröffentlichungstag der Anmeldung: 09.08.2006
(73) Patentinhaber: Ludwig Ehrhardt GmbH, 35321 Laubach (DE)
(72) Erfinder: Reitzig, Klaus, 35321 Laubach (DE)
(74) Vertreter: von Ahsen, Erwin-Detlef

(56) Entgegenhaltungen:
- EP-A- 0 216 000
- DE-A1- 19 647 837
- DE-C- 344 276
- US-A- 4 502 457

## Beschreibung

Die Erfindung betrifft eine Schwenkeinrichtung mit einer Aufnahme für Werkstücke, Vorrichtungen oder (Wechsel-)Paletten sowie mit einem Betätigungsmittel zum Drehen bzw. Verschwenken der Aufnahme gegenüber einem Gehäuse, wobei die Aufnahme mit einer Betätigungswelle verbunden und gemeinsam mit der Betätigungswelle dreh- oder schwenkbar an dem Gehäuse gelagert ist.

Eine solche Schwenkeinrichtung ist aus der DE 196 47 837 A1 bekannt.

Solche Schwenkeinrichtungen dienen zum Verschwenken von Werkstücken oder Vorrichtungen oder Paletten, an denen ihrerseits Werkstücke angebracht sein können, für die Montage von Komponenten und Baugruppen. Mittels der Schwenkeinrichtung können die einzelnen Baugruppen oder dergleichen so positioniert werden, daß für Bearbeitung bzw. Montage erforderliche Tätigkeiten und Funktionen gut durchgeführt werden können.

Bei der Schwenkeinheit nach der DE 196 47 837 A1 ist die Aufnahme auf einer gemeinsamen Welle mit einem Betätigungshebel gegeneinander unverdrehbar gelagert. Der jeweilige Drehwinkel der Aufnahme ist mittels einer ebenfalls auf der Welle und mit dieser unverdrehbar gelagerten Indexscheibe, an deren Umfang mehrere Rastausnehmungen verteilt sind, festsetzbar. Zu diesem Zweck greift in die jeweilige Rastausnehmung eine Sperrklinke ein, welche mittels einer Zugstange am Betätigungshebel außer Eingriff bringbar und so die Aufnahme mittels des Betätigungshebels verdrehbar ist. Die Aufnahme läßt sich auf einfache Weise verdrehen und mit Hilfe der Indexscheibe sehr gut in der gewünschten Position fixieren. Nachteilig ist jedoch, daß der maximal mögliche Schwenkwinkel bzw.

Drehwinkel der Aufnahme je nachdem für ein Verschwenken des Betätigungshebels zur Verfügung stehenden Raum begrenzt ist.

Die DE 344 276 C bezieht sich auf einen Schraubstock für Werkzeugmaschinen. Der Schraubstock lässt sich um eine senkrechte als auch um eine waagerechte Achse beliebig verdrehen und fixieren. Ein Hebel dient in an sich bekannter Weise in direkter Verbindung mit einer Schraubenspindel zum Verstellen einer verschiebbaren Spannbacke gegen eine feste Spannbacke. Auch hier ist von Nachteil, dass das Verdrehen des Hebels vom zur Verfügung stehenden Raum begrenzt ist.

Hiervon ausgehend liegt der Erfindung das Problem zugrunde, eine Schwenkeinrichtung zu schaffen, bei der die Aufnahme unabhängig vom maximalen Schwenkwinkel des Betätigungsmittels verdreht werden kann.

Zur Lösung dieses Problems ist die erfindungsgemäße Schwenkeinrichtung dadurch gekennzeichnet, daß das Betätigungsmittel an einem, drehbar auf der Betätigungswelle geführten, Haltering angebracht ist, der gegenüber der Aufnahme dreh- bzw. schwenkbar ist, und daß an der Betätigungswelle am Umfang verteilte Sperrnuten, insbesondere mit V-förmigem Querschnitt, angeordnet sind, wobei in jeweils eine Sperrnut ein Sperrbolzen zum Fixieren der jeweiligen Position des Betätigungsmittels gegenüber der Aufnahme eingreift.

Aufgrund der erfindungsgemäßen Maßnahme kann nach Erreichen des maximalen Schwenkwinkels des Betätigungsmittels die Fixierung des Betätigungsmittels gegenüber der Aufnahme gelöst und das Betätigungsmittel nun zurückgeschwenkt werden. Jetzt wird das Betätigungsmittel in seiner neuen Position zur Aufnahme wieder fixiert und die Aufnahme kann weitergedreht werden, bis wiederum der maximale Schwenkwinkel des Betätigungsmittels erreicht ist. Dieser Vorgang kann beliebig oft wiederholt werden, so daß die Aufnahme unbegrenzt verdreht werden kann.

Vorzugsweise sind die Aufnahme und Betätigungswelle an einer (Hohl-)Welle angeflanscht, wodurch die Schwenkeinheit leicht montierbar ist. Die Welle kann in einem Gehäuse gelagert und zu beiden Seiten der Welle die Aufnahme bzw. die Betätigungswelle angeflanscht werden.

Nach einer konstruktiven Weiterbildung ist der Sperrbolzen verschieblich im Betätigungsmittel geführt und in Richtung auf die Sperrnuten mittels einer Feder vorgespannt. Das Betätigungsmittel kann dann gegenüber der Betätigungswelle verdreht werden, wobei aufgrund der V-förmigen Sperrnut der Sperrbolzen aus der Sperrnut gleitet. Die dafür erforderliche Kraft hängt von der Federkraft und dem Keilwinkel der Sperrnut ab. Bei Erreichen der nachfolgenden Sperrnut rastet der Sperrbolzen aufgrund der Federvorspannung wieder ein. Das Betätigungsorgan kann aber, wie vorstehend beschrieben, weitergedreht werden. Während dessen sollte die Aufnahme ihrerseits arretiert sein, damit sie nicht ungewollt mitdreht.

Um unabsichtliches Verdrehen bzw. Verschwenken des Betätigungsorgans gegenüber der Aufnahme zu vermeiden, kann der Sperrbolzen in seiner Verriegelungsposition, in welcher der Sperrbolzen in die zugehörige Sperrnut eingreift, arretierbar sein. Hierzu dienen vorzugsweise Sperrkugeln, die beispielsweise radial verschieblich im Sperrbolzen gelagert und mittels eines Entriegelungsmittels in ihrer Verriegelungsposition, in welcher die Sperrkugeln mit dem Betätigungsmittel in Eingriff sind, gehalten sein. Das Entriegelungsmittel ist vorzugsweise gegen die Kraft einer Feder zum Entriegeln der Sperrkugeln betätigbar, so daß in einer Grundposition der Sperrbolzen verriegelt ist. Hierzu kann ein Wulst am Entriegelungsmittel dienen, welcher die Sperrkugeln in der Verriegelungsposition hält. Zum Entriegeln fallen die Sperrkugeln dann beispielsweise in eine Einschnürung.

Eine Weiterbildung der Erfindung befaßt sich mit der Sicherung der Aufnahme bei ungewolltem Lösen des Indexbolzens. Ist nämlich an die Aufnahme ein Werkstück mit zur Drehachse der Aufnahme exzentrischem Schwerpunkt angebracht, verdreht sich das Werkstück mit der Aufnahme, so daß eine Bedienperson durch das Werkstück oder die Aufnahme oder durch den mitgerissenen Betätigungshebel verletzt werden kann. Die Weiterbildung sieht deshalb vor, daß ein zusätzliches Sperrorgan vorgesehen ist. Dieses wirkt vorzugsweise kraftschlüssig mit einem am Gehäuse angeflanschten Klemmring zusammen. Zu diesem Zweck weist das Sperrorgan zwei Klemmrollen auf, welche in Tangentialrichtung der Schwenkbewegung durch eine Feder voneinander weg vorgespannt sind. Diese Klemmrollen drücken gegen den Klemmring und verkeilen sich mit ihm. Dieses gelingt insbesondere dann besonders gut, wenn die Klemmrollen in Ausnehmungen an Schultern derselben in der Betätigungswelle sitzen.

Nach einer auch unabhängig denkbaren Weiterbildung der Erfindung ist koaxial zu der Betätigungswelle axial verschieblich eine (Kulissen-) Ring geführt, welcher mit einer feststehenden Rastscheibe kuppelbar ist. Hierdurch läßt sich die Schwenkeinrichtung auf einfache Weise fixieren, beispielsweise indem der (Kulissen-) Ring zum Ein- und Auskuppeln gegenüber der Rastscheibe axial auf der Betätigungswelle verschoben wird. Dabei empfiehlt es sich, den (Kulissen-) Ring in Richtung auf die Rastscheibe vorzuspannen. Hierdurch ist gewährleistet, daß der Ring stets eingekuppelt ist und zum Endkuppeln betätigt werden muß. Dieses geschieht vorzugsweise durch Betätigen des Betätigungsorgans, mit dem die Schwenkeinrichtung auch verschwenkt wird. Dieses geschieht dann so, daß durch Betätigen des Betätigungsorgans zunächst der (Kulissen-) Ring ausgekuppelt und erst danach, beispielsweise durch weiteres Betätigen des Betätigungsorgans, die Betätigungswelle und damit die Aufnahme verschwenkt wird .

Nach einer konstruktiven Ausgestaltung dieser Weiterbildung ist auf dem Kulissenring ein Mitnahmering koaxial gelagert, wobei der Kulissenring eine Kulisse aufweist, welche mit einem Steuerstift am Mitnahmering zusammenwirkt. Diese Variante ist aus Montagegesichtspunkten besonders geeignet, da in Bohrungen in dem auf dem Kulissenring sitzenden Mitnahmering die Steuerstifte von außen radial hinein gedrückt werden können. Kinematisch ist es selbstverständlich aber auch möglich, wenn der äußere Mitnahmering die Kulisse aufweist und dem inneren Kulissenring die Steuerstifte zugeordnet sind. Die Steuerstifte müssen dann nur von innen radial nach außen durch den Kulissenring hindurchgedrückt werden, was von der Montage her nicht so günstig ist. Die Kulisse selbst ist vorzugsweise V- bzw. herzförmig ausgebildet. Hierdurch wird sie in beide Drehrichtungen der Betätigungswelle und damit bei der Schwenkrichtung der Aufnahme wirksam. Der Steuerstift gleitet dann entweder in dem einen oder dem anderen Schenkel der Kulisse.

Die Erfindung wird nachfolgend anhand von in der Zeichnung dargestellten Ausführungsbeispielen näher erläutert. Es zeigen:
- Fig. 1: ein erstes Ausführungsbeispiel für eine Schwenkeinrichtung mit den Erfindungsmerkmalen im Vertikalschnitt,
- Fig. 2: ein Betätigungsorgan für die Schwenkeinrichtung gemäß Fig. 1 im Vertikalschnitt,
- Fig. 3: ein Detail des Betätigungsorgans gemäß Fig. 2,
- Fig. 4: ein zweites Ausführungsbeispiel für eine Schwenkeinrichtung mit den Erfindungsmerkmalen im Vertikalschnitt,
- Fig. 5: ein Betätigungsorgan für die Schwenkeinrichtung gemäß Fig. 4 in Vorderansicht,
- Fig. 6: das Betätigungsorgan gemäß Fig. 5 im Vertikalschnitt in der Ebene VI-VI gemäß Fig. 4,
- Fig.7: ein weiteres Ausführungsbeispiel für ein Betätigungsorgan für eine Schwenkeinrichtung mit den Erfindungsmerkmalen in perspektivischer Explosionsdarstellung.

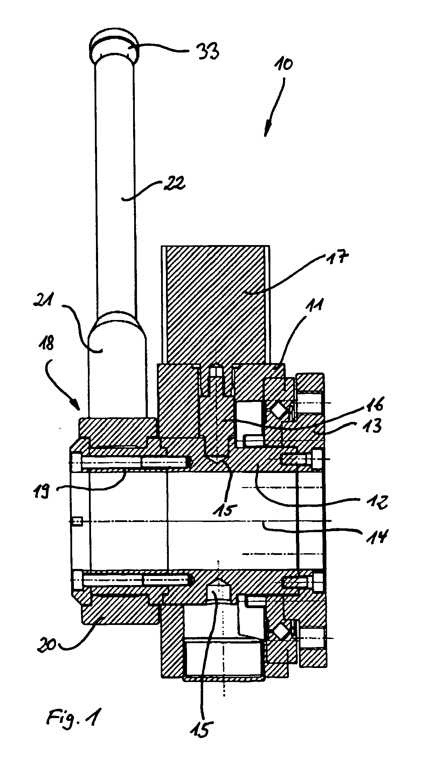

Die in Fig. 1 gezeigte Schwenkeinrichtung 10 weist ein Gehäuse 11 auf, in dem eine Hohlwelle 12 verdrehbar mittels geeigneter Lager gelagert ist. An der einen Stirnseite der Hohlwelle 12 ist eine Aufnahme 13 angeflanscht, an welcher Vorrichtungen oder Werkstücke oder dergleichen für deren Bearbeitung oder zur Montage angebracht werden können.

Die Aufnahme 13 ist, wie gesagt, mit der Hohlwelle 12 frei gegenüber dem Gehäuse 11 um die Längsachse 14 der Hohlwelle 12 verdrehbar. Um die Aufnahme 13 in ihrer jeweiligen Position gegenüber dem Gehäuse 11 fixieren zu können, weist die Hohlwelle 12 an ihrem äußeren Umfang verteilte Indexbohrungen 15 auf. Die Zahl der Indexbohrungen 15 und ihre Orientierung zueinander hängt vom jeweiligen Anwendungsfall, nämlich den gewünschten Winkeleinstellungen der Aufnahme 13 gegenüber dem Gehäuse 11, ab. In der jeweiligen Winkellage entsprechende Indexbohrung 15 greift ein Indexbolzen 16 ein, welcher mittels einer Betätigungseinrichtung 17 in und außer Eingriff mit der jeweiligen Indexbohrung 15 bringbar ist. Die Betätigungseinrichtung 17 kann dabei mechanisch, zum Beispiel über einen Bowdenzug, oder druckmittelbetätigt oder elektromagnetisch arbeiten. Eine druckmittelbetätigte Betätigungseinrichtung 17 kann über einen Geberzylinder oder durch externe Pumpen angesteuert werden.

Zum Verdrehen der Aufnahme 13 dient ein Betätigungsorgan 18, welches an der der Aufnahme 13 gegenüberliegenden Stirnseite der Hohlwelle 12 angeflanscht ist. Das Betätigungsorgan 18 weist eine innere, unverdrehbar an der Hohlwelle 12 angeflanschte Betätigungswelle 19 auf, auf der ein Haltering 20 gegenüber der Betätigungswelle 19 verdrehbar, jedoch in Axialrichtung unverschieblich geführt, gelagert ist.

In den Haltering 20 ist eine Distanzhülse 21 geschraubt, in die ihrerseits ein Schwenkhebel 22 an ihrem gegenüberliegenden Ende eingeschraubt ist.

Am äußeren Umfang der Betätigungswelle 19 sind mehrere, im vorliegenden Fall vier, um 90° zueinander versetzte Sperrnuten 23 mit V-förmigem Querschnitt vorgesehen. In eine der Sperrnuten 23 greift ein Sperrbolzen 24 mit zur Kontur der Sperrnuten 23 korrespondierendem freiem Stirnende ein. Der Sperrbolzen 24 ist topfartig ausgebildet. In ihn greift eine Entriegelungsstange 25 ein, welche mittels einer Druckfeder 26 in Richtung von der Betätigungswelle 19 weg vorgespannt ist. Ferner sind am Umfang des Sperrbolzens 24 verteilte Bohrungen 27 vorgesehen, in welche Sperrkugeln 28 gelagert sind. Die Sperrkugeln 28 greifen in Ausnehmungen 29 auf der Innenseite der Distanzhülse 21, so daß sich der Sperrbolzen 24 in seiner Axialrichtung nicht in der Distanzhülse 21 verschieben läßt. In dieser Position greift der Sperrbolzen 24, wie gezeigt, in eine der Sperrnuten 23 ein und fixiert den Schwenkhebel 22 so in seiner Position gegenüber der Betätigungswelle 19.

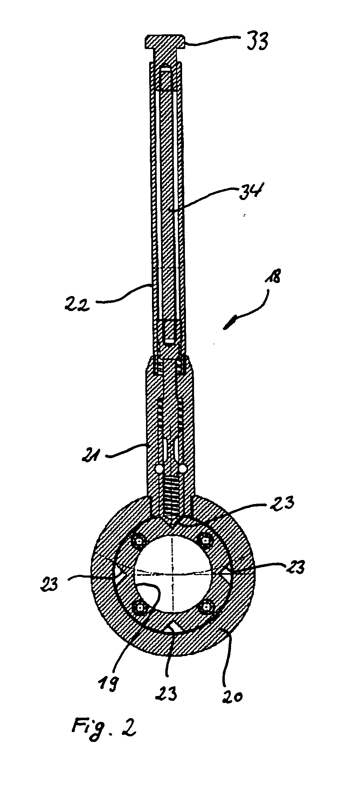

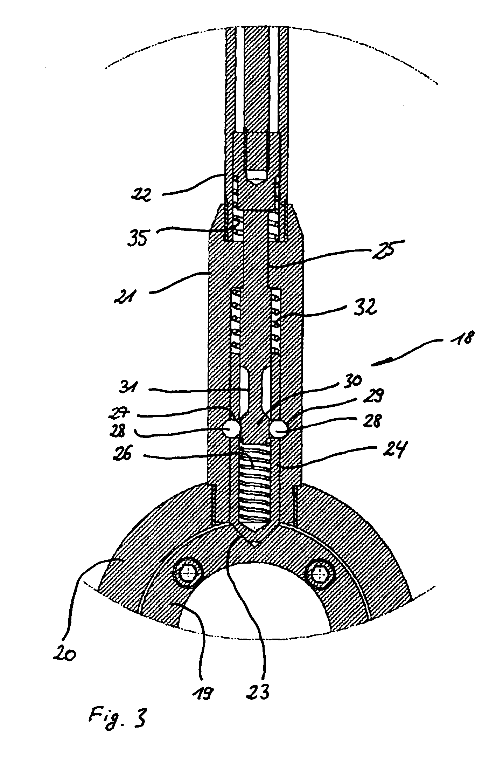

In dieser Position werden die Sperrkugeln 28 durch einen Wulst 30 nach außen in die Ausnehmung 29 in der Distanzhülse 21 gedrückt und so der Sperrbolzen arretiert. In der Darstellung gemäß Fig. 2 und 3 oberhalb des Wulstes 30 weist die Entriegelungsstange 25 eine Einschnürung 31 auf. Wird nun die Entriegelungsstange 25 gegen die Kraft der Feder 26 nach unten auf die Betätigungswelle 19 gedrückt, fallen die Sperrkugeln 28 in die Einschnürung 31 und damit aus der Ausnehmung 29 heraus. Der Sperrbolzen 24 kann nun nach oben, also von der Betätigungswelle 19 weg, gegen die Kraft einer Druckfeder 32 verschoben werden, so daß er außer Eingriff mit der jeweiligen Sperrnut 23 gerät. Zu diesem Zweck drückt eine Bedienperson auf einen Bedienknopf 33, welcher die Druckkraft durch eine Druckstange 34 auf die Entriegelungsstange 25 überträgt. Die Bedienperson kann nun den Schwenkhebel 22 verschwenken, wobei in Folge des Keilwinkels der Entriegelungsnut 23 der Sperrbolzen 24 gegen die Kraft einer Druckfeder 32 außer Eingriff mit der jeweiligen Sperrnut 23 gerät. Die Bedienperson kann nun den Druckknopf 33 loslassen und der Sperrbolzen 24 rastet aufgrund seiner Vorspannung durch die Druckfeder 32 in die nächstfolgende Spermut 23 ein. Hält die Bedienperson den Druckknopf 33 gedrückt oder drückt sie ihn erneut, kann der Schwenkhebel 22 weiter gegenüber der Betätigungswelle 19 verschwenkt werden. Während dieser Zeit ist die Hohlwelle 12 mittels des Indexbolzens 16 arretiert, so daß sie nicht mit verdreht wird.

Im vorliegenden Fall ist noch eine weitere Druckfeder 35 gezeigt, welche den Entriegelungsbolzen 25 zusätzlich von der Betätigungswelle 19 weg vorspannt. Die Druckfedern 26 und 35 können, wie gezeigt, zusätzlich zueinander oder auch alternativ eingesetzt werden.

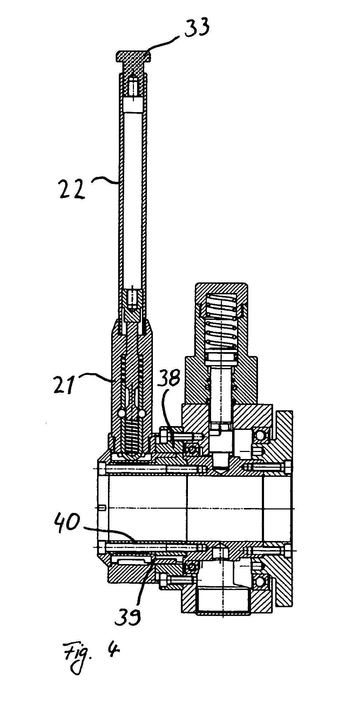

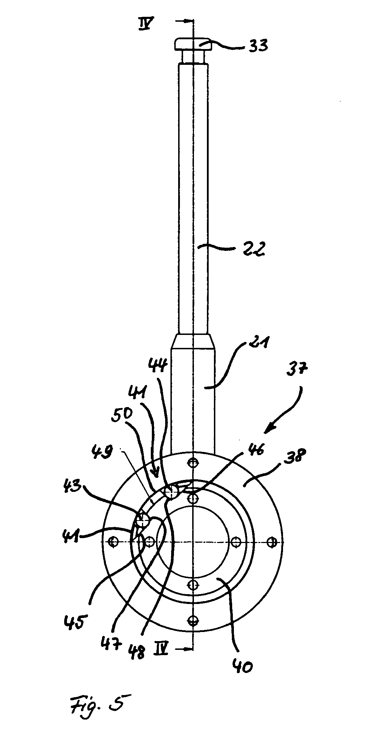

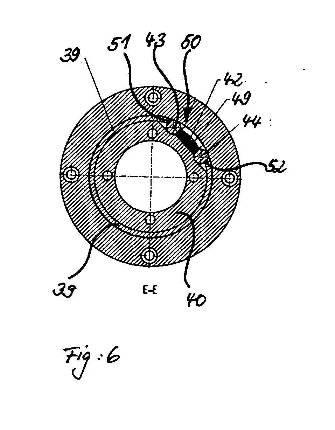

Die in Fig. 4 gezeigte Schwenkeinrichtung 36 unterscheidet sich von der vorstehend beschriebenen Schwenkeinrichtung 10 durch ihr Betätigungsorgan 37, welches in Fig. 5 und 6 näher gezeigt ist. Soweit die Schenkeinrichtung 36 gleiche Bauteile aufweist wie die Schwenkeinrichtung 10, sind diese gleichen Bauteile mit denselben Bezugsziffern bezeichnet.

Das Betätigungsorgan 37 weist einen Klemmring 38 auf, welcher fest an das Gehäuse 11 angeflanscht ist. Der Klemmring 38 ist somit unverdrehbar. In dem Klemmring 38 ist ein Mitnehmerring 39 drehbar gelagert, welcher an seinem Außenumfang die Nuten 23 für den Sperrbolzen 24 aufweist. Allerdings sind die Nuten 23 hier, abweichend zum Ausführungsbeispiel gemäß Fig. 1 bis 3, schalenförmig ausgebildet. Im Mitnehmerring 39 ist seinerseits eine hohle Betätigungswelle 40 gelagert, welche, analog der Betätigungswelle 19 gemäß Fig. 1 bis 3, an die Hohlwelle 12 angeflanscht ist.

Ein Sperrorgan 41 sorgt dafür, daß sich auch bei einem unbeabsichtigten Lösen des Indexbolzens 16 die Aufnahme 13 nicht gegenüber dem Gehäuse 11 verdreht, was insbesondere bei aufgespannten Bauteilen mit zur Hohlwelle 12 exzentrischem Schwerpunkt von Bedeutung ist. Das Sperrorgan 41 weist zwei durch eine Feder 42 in Tangentialrichtung des Mitnehmerrings 39 voneinander weg vorgespannte Klemmrollen 43, 44 auf. Diese Klemmrollen 43, 44 ruhen in Ausnehmungen 45, 46 in der Betätigungswelle 40 und liegen an Schultern 47, 48 dieser Ausnehmungen 45, 46 so an, daß sie voneinander beabstandet gehalten werden. Ferner ist zwischen den Klemmrollen 43, 44 ein unverdrehbar, insbesondere einstückig, mit der Betätigungswelle 40 verbundener Mitnehmer 49 vorgesehen.

Der Mitnehmerring 39 weißt einen Schlitz 50 auf, der breit genug ist die Klemmrollen 43, 44 zwischen seinen Kanten 51, 52 aufzunehmen.

Will sich nun aufgrund unbeabsichtigten Lösens des Indexbolzens 16 die Aufnahme 13 und mit ihr die Betätigungswelle 40 verdrehen, drückt die in Drehrichtung der Betätigungswelle 40 gesehen voreilende Klemmrolle 43 bzw. 44 von innen gegen den Klemmring 38 und bremst die Betätigungswelle 40 kraftschlüssig. Das heißt, ausgehend von der Darstellung in Fig. 5 drückt bei einer Drehung der Betätigungswelle 40 gegenüber dem Klemmring 38 nach rechts die Klemmrolle 44 und bei einer Drehung nach links die Klemmrolle 43 gegen den Klemmring 38. Die Sperreinrichtung 41 arbeitet also letztlich nach dem Prinzip eines Freilaufs.

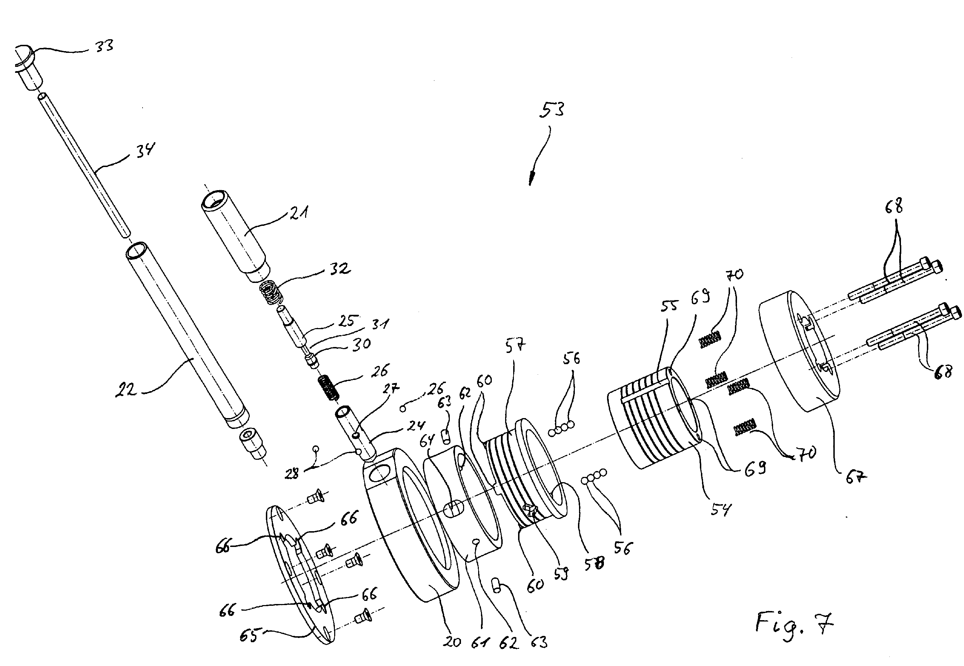

Ein weiteres Ausführungsbeispiel ist in Fig. 7 gezeigt, in der gleiche Bauteile wieder mit denselben Bezugsziffern wie bei den vorstehenden Ausführungsbeispielen bezeichnet sind. Das Betätigungsorgan 53 gem. Fig. 7 weist eine Betätigungswelle 54 auf, welche, wie auch die Betätigungswelle 19 bzw. 40 gem. der vorstehend beschriebenen Ausführungsbeispiele, mit der Hohlwelle 12 der Schwenkeinrichtung 10 verschraubt ist (vgl. Fig. 1). Am Außenumfang sind zwei einander diametral gegenüber liegende, in Länksrichtung der Betätigungswelle verlaufende Nuten 55 vorgesehen. Selbstverständlich ist auch eine von zwei abweichende Anzahl von Nuten 55 möglich, die dann äquidistant am Umfang verteilt angeordnet sein sollten. Die Nuten 55 nehmen jeweils eine bestimmte Anzahl, im vorliegenden Fall vier, Kugeln 56 auf. Anstelle der Kugeln 56 können andere formschlüssige Sperrglieder, wie beispielsweise Paßfedern, verwendet werden.

Auf der Betätigungswelle 54 ist koaxial ein Kulissenring 57 montiert, welcher an seiner Innenseite zu den Nuten 55 der Betätigungswelle 54 korrespondierende Nuten 58 aufweist. Die Kugeln 56 sind somit zwischen den beiden Nuten 55 und 58 exakt geführt sind. Im Mantel des Kulissenrings 57 sind weiterhin zwei V-förmige oder herzförmige Kulissen 59 vorgesehen, welche wiederum äquidistant, also diametral einander gegenüber liegend angeordnet sind. Die Schenkel der Kulisse 59 sind zur Längsmittelebene des Kulissenrings 57 spiegelsymmetrisch angeordnet, konkret um etwa 45° zur Längsmittelebene geneigt, so daß sie einen 90°-Winkel einschließen. Die Kulissen 59 sind um 90° gegenüber den Nuten 58 verdreht, liegen also immer auf dem halben Umfangsabschnitt zwischen zwei benachbarten Nuten 58. Dieses ist jedoch nicht exakt einzuhalten. Wichtig ist nur, daß die Nuten 58 die Kulissen 59 nicht schneiden, sondern diese nebeneinander liegen. Der Kulissenring 57 weist weiterhin Sperrklinken 60 auf, von denen im vorliegenden Fall vier äquidistant an einer Stirnseite des Kulissenrings 57 verteilt angeordnet sind.

Wiederum koaxial auf den Kulissenring 57 ist ein Mitnahmering 61 angeordnet. Der Mitnahmering 61 weist zu den Kulissen 59 des Kulissenrings 57 korrespondierende Bohrungen 62 auf, in welche Steuerstifte 63 eingesetzt werden. Die Steuerstifte 63 stehen nach innen gegenüber dem Mitnahmering 61 vor und greifen so in die Kulisse 59. Ferner weist der Mitnahmering 61, im vorliegenden Fall vier, äquidistant am Umfang verteilte Sperrnuten 64 auf, die in ihrer Funktion den Sperrnuten 23 gemäß den in den Fig. 1 bis 6 gezeigten Ausführungsbeispielen entsprechen, in die also der Sperrbolzen 24 eingreift. Koaxial und wiederum verdrehbar zu dem Mitnahmering 61 ist auf dem Mitnahmering 61 der Haltering 20 angeordnet.

An der dem Betätigungsorgan 53 zugewandten Seite wird eine Rastscheibe 65 an der Schwenkeinrichtung 10 unverdrehbar eingeschraubt. Die Rastscheibe 65 weist an ihrer Innenseite zu den Sperrklinken 60 korrespondierende Ausnehmungen 66 auf, in welche die Sperrklinken 60 im gekuppelten Zustand eingreifen. In dieser Position wird der Kulissenring 57 unverdrehbar gehalten.

Von der der Rastscheibe 65 gegenüberliegenden Stirnseite ist ein Druckring 67 aufgeschoben. Mittels Schrauben 68, welche auch durch Längsbohrungen 69 in der Betätigungswelle 54 geführt sind, ist der Druckring 67 und die Betätigungswelle 54 unverdrehbar gegenüber der Hohlwelle 12 mit der Hohlwelle 12 der Schwenkeinrichtung 10 verbunden. An dem Druckring 67 stützen sich Druckfedern 70 ab, welche den Kulissenring 57 in Richtung auf die Rastscheibe 65 drücken, so daß die Sperrklinken 60 in die Ausnehmungen 66 einrasten, wenn sie zueinander fluchten.

Das insoweit beschriebene Betätigungsorgan 53 hat nun folgende Funktionsweise:

Wird der Schwenkhebel 22 bei in die Sperrnut 64 eingreifendem Sperrbolzen 24 verdreht, nimmt der Schwenkhebel 22 den Mitnahmering 61 mit. Da in dieser Position zunächst die Sperrklinken 60 in die Ausnehmungen 66 der Rastscheibe 65 eingreifen, kann sich der Kulissenring 57 nicht zusammen mit dem Mitnahmering 61 verdrehen. In dieser Position liegen die Steuerstifte 69 im Grund der jeweils zugehörigen V- oder herzförmigen Kulisse 59. Die Steuerstifte 63 gleiten nun an den Schrägen Schenkeln der Kulisse 59 entlang, wodurch der Kulissenring 57 gegen die Kraft der Federn 70 von der Rastplatte 65 weg gedrückt wird. Die Rastklinken 60 geraten hierdurch außer Eingriff mit den Ausnehmungen 66 in der Rastscheibe 65, so daß nun der Kulissenring 57 zusammen mit dem Mitnahmering 61 verdreht wird. Diese Drehbewegung wird über die Kugeln 56 auf die Betätigungswelle 54 übertragen, die hierdurch die Hohlwelle 12 der Schwenkeinrichtung 10 verdreht und somit die Aufnahme 13 verschwenkt. Sobald die Rastklinken 60 in Deckung mit der in die jeweilige Drehrichtung gesehenen nächsten Ausnehmung 66 kommen, wird der Kulissenring infolge der Federvorspannung der Druckfedern 70 in Richtung auf die Rastscheibe 65 gedrückt. Die Sperrklinken 60 greifen nun wieder in diese Ausnehmungen 66 ein und die Schwenkeinheit bestehend aus der Schwenkeinrichtung 10 und dem Betätigungsorgan 53 ist arretiert. In dieser Position liegen die Steuerstifte 63 im Grund der V-förmigen Kulissen 59 im Kulissenring 57.

Gegenüber den Ausführungsbeispielen der Fig. 1 bis 6 hat das Ausführungsbeispiel gemäß Fig. 7 den Vorteil, daß keine gesondert zu bedienende Arretierung der Schwenkeinheit über die Indexbohrungen 15 mit Indexbolzen 16 mehr erforderlich ist Vielmehr kann die Schwenkeinheit mittels des Schwenkhebels 22 einhandbedient" werden. Ggf. kann sogar die Hohlwelle 12 entfallen und die Betätigungswelle 54 direkt mit der Aufnahme 13 verschraubt sein.

### Bezugszeichenliste:

- 10: Schwenkeinrichtung
- 11: Gehäuse
- 12: Hohlwelle
- 13: Aufnahme
- 14: Längsachse
- 15: Indexbohrung
- 16: Indexbolzen
- 17: Betätigungseinrichtung
- 18: Betätigungsorgan
- 19: Betätigungswelle
- 20: Haltering
- 21: Distanzhülse
- 22: Schwenkhebel
- 23: Spermut
- 24: Sperrbolzen
- 25: Entriegelungsstange
- 26: Feder
- 27: Bohrung
- 28: Sperrkugel
- 29: Ausnehmung
- 30: Wulst
- 31: Einschnürung
- 32: Feder
- 33: Druckknopf
- 34: Druckstange
- 35: Feder
- 36: Schwenkeinrichtung
- 37: Betätigungsorgan
- 38: Klemmring
- 39: Mitnehmerring
- 40: Betätigungswelle
- 41: Sperrorgan
- 42: Feder
- 43: Klemmrolle
- 44: Klemmrolle
- 45: Ausnehmung
- 46: Ausnehmung
- 47: Schulter
- 48: Schulter
- 49: Mitnehmer
- 50: Schlitz
- 51: Kante
- 52: Kante
- 53: Betätigungsorgan
- 54: Betätigungswelle
- 55: Nut
- 56: Kugeln
- 57: Kulissenring
- 58: Nut
- 59: Kulisse
- 60: Sperrklinke
- 61: Mitnahmering
- 62: Bohrung
- 63: Steuerstift
- 64: Spermut
- 65: Rastscheibe
- 66: Ausnehmung
- 67: Druckring
- 68: Schraube
- 69: Längsbohrung
- 70: Druckfeder

## Patentansprüche

1. Schwenkeinrichtung mit einer Aufnahme (13) für Werkstücke, Vorrichtungen oder (Wechsel-)Paletten, sowie mit einem Betätigungsmittel (22), insbesondere ein Schwenkhebel, zum Drehen bzw. Schwenken der Aufnahme (13) gegenüber einem Gehäuse (11), wobei die Aufnahme (13) mit einer Betätigungswelle (19, 49, 54) verbunden und gemeinsam mit der Betätigungswelle (19, 49. 54) dreh- oder schwenkbar an dem Gehäuse (11) gelagert ist, **dadurch gekennzeichnet, daß** das Betätigungsmittel (22) an einem, drehbar auf der Betätigungswelle (19, 49, 54) geführten, Haltering (20) angebracht ist, der gegenüber der Aufnahme (13) dreh- bzw. schwenkbar ist, und daß an der Betätigungswelle (19, 49, 54) am Umfang verteilte Sperrnuten (23, 64), insbesondere mit V-förmigem Querschnitt, angeordnet sind, wobei in jeweils eine Sperrnut (23, 64) ein Sperrbolzen (24) zum Fixieren der jeweiligen Position des Betätigungsmittels (22) gegenüber der Aufnahme (13) eingreift.

2. Schwenkeinrichtung nach Anspruch 1, **dadurch gekennzeichnet, daß** die Betätigungswelle (19, 49, 54) einerseits und die Aufnahme (13) andererseits an eine (Hohl-)Welle (12) angeflanscht sind.

3. Schwenkeinrichtung nach Anspruch 1 oder 2, **dadurch gekennzeichnet, daß** der Sperrbolzen (24) verschieblich im Betätigungsmittel (22) geführt und in Richtung auf die Sperrnuten (23, 64) mittels einer Feder (32) vorgespannt ist.

4. Schwenkeinrichtung nach Anspruch 3, **dadurch gekennzeichnet, daß** der Sperrbolzen (24) in seiner Verriegelungsposition, in welcher der Sperrbolzen (24) in die zugehörige Sperrnut (23, 64) eingreift, insbesondere mittels Sperrkugeln (28), arretierbar ist.

5. Schwenkeinrichtung nach Anspruch 4, **dadurch gekennzeichnet, daß** die Sperrkugeln (28) radial verschieblich im Sperrbolzen (24) gelagert und mittels eines, insbesondere gegen die Kraft einer Feder (26, 35) zum Entriegeln der Sperrkugeln (28) betätigbares, Entriegelungsmittels (25) in ihrer Verriegelungsposition, in welcher die Sperrkugeln (28) mit dem Betätigungsmittel (22) in Eingriff sind, gehalten sind.

6. Schwenkeineinrichtung nach Anspruch 5, **dadurch gekennzeichnet, daß** das Entriegelungsmittel (25) einen Wulst (30) aufweist, welcher die Sperrkugeln (28) in der Verriegelungsposition hält, und eine Einschnürung (31) in welcher die Sperrkugeln (28) zum Entriegeln fallen.

7. Schwenkeinrichtung nach einem der Ansprüche 1 bis 6, **dadurch gekennzeichnet, daß** die Aufnahme (13) mittels eines in beide Drehrichtungen wirkenden Sperrorgans (41) gebremst ist, welches insbesondere mit einem am Gehäuse (11) angeflanschten Klemmring (38), vorzugsweise kraftschlüssig, zusammenwirkt.

8. Schwenkeinrichtung nach Anspruch 7, **dadurch gekennzeichnet, daß** das Sperrorgan (41) zwei durch eine Federklammer (42) in Tangentialrichtung eines Mitnehmerringes (39) voneinander weg vorgespannte Klemmrollen (43, 44) aufweist, welche insbesondere in Ausnehmungen (45, 46) in der Betätigungswelle (40) liegen und an Schultern (47, 48) dieser Ausnehmungen (45, 46) anliegen.

9. Schwenkeinrichtung nach einem der Ansprüche 1 bis 8, **dadurch gekennzeichnet, daß** koaxial zu der Betätigungswelle (54) axialverschieblich ein (Kulissen-)Ring (59) geführt ist, welcher mit einer feststehenden Rastscheibe (65) kuppelbar und insbesondere in Richtung auf die Rastscheibe (65) vorgespannt ist.

10. Schwenkeinrichtung nach Anspruch 9, **dadurch gekennzeichnet, daß** der (Kulissen-)Ring (59) durch betätigen des Betätigungsorgans (22) zunächst von der Rastscheibe (65) entkuppelt und erst dann die Betätigungswelle (54) verdreht wird, insbesondere wobei auf dem (Kulissen-)Ring (59) ein Mitnahmering (61) koaxial gelagert ist und der (Kulissen-)Ring (59) eine, vorzugsweise V- oder herzförmig ausgebildete, Kulisse (60) aufweist, welche mit einem Steuerstift (63) am Mitnahmering (61) zusammenwirkt oder umgekehrt.

## Claims

1. Swivelling device including a receiving section (13) for work pieces, devices or (interchangeable) pallets as well as an actuating means (22), in particular a swivelling lever, for rotating or swivelling said receiving section (13) relative to a housing (11), with said receiving section (13) being connected to an actuating shaft (19, 49, 54) and being supported, jointly with said actuating shaft (19, 49, 54) for rotation or swivelling movement on said housing (11), **characterised** i n that said actuating means (22) is mounted on a retaining ring (20) guided for rotation on said actuating shaft (19, 49, 54), which ring is rotatable or slewable relative to said receiving section (13), and that locking grooves (23, 64) are peripherally distributed on said actuating shaft (19, 49, 54), in particular with a V-shaped cross-section, with one locking bolt (24) engaging in a respective locking groove (23, 64) for fixing the respective position of said actuating means (22) relative to said receiving section (13).

2. Swivelling device according to Claim 1, **characterised in that** said actuating shaft (19, 49, 54), on the one hand, and said receiving section (13), on the other hand, are flange-mounted to a (hollow) shaft (12).

3. Swivelling device according to Claim 1 or 2, **characterised in that** said locking bolt (24) is guided for displacement in said actuating means (22) and is biased by means of a spring (32) in a direction towards said locking grooves (23, 64).

4. Swivelling device according to Claim 3, **characterised in that** said locking bolt (24) is adapted to be locked, in particular by means of locking spheres (28), in its locking position in which the locking bolt (24) engages in the associated locking groove (23, 64).

5. Swivelling device according to Claim 4, **characterised in that** said locking spheres (28) are supported in said locking bolt (24) for radial displacement and are retained by means of an unlocking means (25), which is adapted, in particular, to be actuated against the force of a spring (26, 35) for unlocking said locking spheres (28), in its locking position in which said locking spheres (28) are engaged in said actuating means (22).

6. Swivelling device according to Claim 5, **characterised in that** said unlocking means (25) presents a bulge (30) retaining said locking spheres (28) in the locking position, as well as a necked portion (31) in which said locking spheres (28) drop down for unlocking.

7. Swivelling device according to any of the Claims 1 to 6, **characterised in that** said receiving section (13) is braked by means of a locking element (41) operative in both directions of rotation, which cooperates, in particular, with a clamping ring (28) flange-mounted on said housing (11), preferably by friction.

8. Swivelling device according to Claim 7, **characterised in that** said locking element (41) comprises two clamping rollers (43, 44) biased apart from each other in the tangential direction of an annular driving element (39) by a resilient clip (42), which rollers are located, in particular, in recesses (45, 46) of said actuating shaft (40) and bear against shoulders (47, 48) of these recesses (45, 46).

9. Swivelling device according to any of the Claims 1 to 8, **characterised in that** a (slide) ring (59) is guided coaxially relative to said actuating shaft (54) for axial displacement, which is adapted to be coupled to a stationary securing disc (65) and is biased, in particular, in a direction towards said securing disc (65).

10. Swivelling device according to Claim 9, **characterised in that** said (sliding) ring (59) is initially decoupled by operation of said actuating element (22) from said securing disc (65) and that only then said actuating shaft (54) is rotated, in particular with a driving ring (61) being supported coaxially on said (slide) ring (59) and with said (slide) ring (59) presenting a slide element (60), preferably in a V-shaped or heart-shaped configuration, which cooperates with a control pin (63) on said driving ring (61) or vice versa.

## Revendications

1. Dispositif pivotant comprenant une partie réceptrice (13) à recevoir des pièces à usiner, des dispositifs ou palettes (échangeables) ainsi qu'un moyen de commande (22), en particulier un levier pivotant, à tourner ou pivoter ladite partie réceptrice (13) relativement à un carter (11), à ladite partie réceptrice (13) étant raccordée à une tige de commande (19, 49, 54) et s'appuyant, ensemble avec ladite tige de commande (19, 49, 54), pour un mouvement tournant ou pivotant audit carter (11), **caractérisé en ce que** ledit moyen de commande (22) est monté à un anneau de retenu (20) guidé en rotation à ladite tige de commande (19, 49, 54), lequel anneau est rotatif ou pivotant relativement à ladite partie réceptrice (13), et **en ce que** des rainures d'arrêt (23, 64) sont distribuées en arrangement circonférentiel à ladite tige de commande (19, 49, 54), en particulier à une section transversale en V, à une goupille d'arrêt (24) se trouvant en prise dans une rainure d'arrêt (23, 64) respective afin de fixer la position respective dudit moyen de commande (22) relativement à ladite partie réceptrice (13).

2. Dispositif pivotant selon la revendication 1, **caractérisé en ce que** ladite tige de commande (19, 49, 54), d'un côté, et ladite partie réceptrice (13), d'autre côté, sont bridé à un arbre (creux) (12).

3. Dispositif pivotant selon la revendication 1 or 2, **caractérisé en ce que** ladite goupille d'arrêt (24) est guidée à se déplacer dans ledit moyen de commande (22), en étant mise en précontrainte moyennant un ressort (32) en une direction vers lesdites rainures d'arrêt (23, 64).

4. Dispositif pivotant selon la revendication 3, **caractérisé en ce que** ladite goupille d'arrêt (24) est apte à être arrêté, en particulier moyennant des sphères d'arrêt (28), en sa position de blocage dans laquelle la goupille d'arrêt (24) se trouve en prise dans la rainure d'arrêt affectée (23, 64).

5. Dispositif pivotant selon la revendication 4, **caractérisé en ce que** lesdits sphères d'arrêt (28) s'appuient dans ladite goupille d'arrêt (24) pour un déplacement radial, en étant retenu moyennant un moyen de déblocage (25) apte à être commandé, en particulier, à l'encontre de la force d'un ressort (26, 35) afin de débloquer lesdits sphères d'arrêt (28), en sa position de blocage, dans laquelle lesdits sphères d'arrêt (28) se trouvent en prise dans ledit moyen de commande (22).

6. Dispositif pivotant selon la revendication 5, **caractérisé en ce que** ledit moyen de déblocage (25) présente un bourrelet (30) retenant lesdits sphères d'arrêt (28) en leur position de blocage, ainsi qu'une partie rétrécie (31), dans laquelle tombent lesdits sphères d'arrêt (28) en bas pour le déblocage.

7. Dispositif pivotant selon une quelconque des revendications 1 à 6, **caractérisé en ce que** ladite partie réceptrice (13) st freinée moyennant un élément de blocage (41) agissant en les deux sens de of rotation, qui coopère, en particulier, avec un anneau de serrage (28) bridé audit carter (11), de préférence par adhésion.

8. Dispositif pivotant selon la revendication 7, **caractérisé en ce que** ledit élément de blocage (41) comprend deux rouleaux de serrage (43, 44) mis en précontrainte l'un à part de l'autre en sens tangentiel d'un élément annulaire entraîneur (39) par une pince élastique (42), ces rouleaux étant disposés, en particulier, dans des cavités (45, 46) de ladite tige de commande (40) et portant contre des épaules (47, 48) de ces cavités (45, 46).

9. Dispositif pivotant selon une quelconque des revendications 1 à 8, **caractérisé en ce qu'**un anneau (coulisse) (59) est guidé en sens coaxial relativement à ladite tige de commande (54) pour le déplacement axial, qui est apte à être accouplé à un disque de retenu stationnaire (65), en étant mis en précontrainte, en particulier, en une direction vers ledit disque de retenu (65).

10. Dispositif pivotant selon la revendication 9, **caractérisé en ce que** ledit anneau (coulisse) (59) est d'abord désaccouplé dudit disque de retenu (65) par la commande dudit élément de commande (22), et **en ce qu'**ensuite ladite tige de commande (54) est tournée, en particulier à un anneau entraîneur (61) s'appuyant audit anneau (coulisse) (59) et audit anneau (coulisse) (59) présentant un élément coulisse (60), de préférence en V ou sous forme d'un coeur, qui coopère avec une goupille de commande (64) audit anneau entraîneur (61) ou vice versa.
